# EUROPEAN PATENT SPECIFICATION

(11) **EP 2 769 878 B1**
(45) Date of publication and mention of the grant of the patent: **25.03.2015**
(21) Application number: 13156011.2
(22) Date of filing: 20.02.2013
(51) Int. Cl.: B60N 2/44, F15B 13/08

(54) **Seat adjusting device and method of providing seat adjustment**
Sitzeinstellvorrichtung und Verfahren zur Sitzeinstellung
Dispositif de réglage d'un siège et procédé de fourniture de réglage de siège

(43) Date of publication of application: 27.08.2014
(73) Proprietor: Schukra Gerätebau GmbH, 2560 Berndorf (AT)
(72) Inventor: Bocsanyi, Berthold, 91227 Leinburg (DE)
(74) Representative: Meier, Florian

(56) References cited:
- WO-A1-2013/017143
- CN-A- 102 874 144
- DE-A1- 10 063 478

## Description

### Technical Field

The invention relates to a seat adjusting device and to a method of providing seat adjustment. The invention relates in particular to such seat adjusting devices and methods which utilize control valves to provide pneumatic adjustment of a seat contour. The invention relates to such devices and methods which may be used for providing adjustable support in a vehicle seat.

### Background

Lumbar supports, side supports or other adjustable supports as well as massage units are frequently provided in seats to enhance an occupant's comfort when seated on the seat. Lumbar support devices are provided in backrests in order to provide adequate support in the lumbar vertebral or lordosis region of a person sitting on the seat by forming a suitable support surface. Side supports are provided on a backrest and/or on a seat portion to provide adjustable side support. The latter may be desirable not only to accommodate varying occupant sizes, but also to actively adjust lateral support in response to centrifugal forces. Massage units may be integrated into a seat to stimulate blood circulation and/or to further enhance occupant comfort.

Some implementations of seat adjusting devices utilize one or plural inflatable fluid chambers. The fluid chambers may be configured as inflatable cushions or bladders which change their shape and/or size in dependence on an amount of fluid contained therein. Examples for seats having lumbar support devices implemented using inflatable fluid chambers are described in EP 1 072 465 A1 or in DE 100 63 478 A1. An adjustment of the adjustable support may be effected by means of a pressure source and a suitably configured pneumatic circuit comprising valves and connecting members, such as tubes.

While pneumatic elements, such as valves, may enhance life time of and/or comfort provided by the adjustable support device, such components may add to installation space and cost. In order to address problems associated with installation space, installation time and installation cost, a plurality of valves can be assembled to form a valve battery, which may be pre-assembled prior to installation in a seat. DE 44 13 657 C1 describes an example for a valve battery, with one valve being integrated into each module and plural modules being combined to form the valve battery. EP 2 461 046 A1 describes a seat adjusting device which uses a plurality of valves which includes one or several 3/3-way valves to attain a significant degree of control over the various inflatable chambers.

Document DE102011107677A discloses a seat adjusting device according to the preamble of claim 1 and a method of providing seat adjustment according to the preamble of claim 14.

### Summary

There is a continued need in the art for seat adjusting devices and methods in which plural inflatable chambers may be inflated or deflated in a controlled manner, using a valve module having a small number of valves. There is a continued need in the art for a seat adjusting device and method which can be readily integrated into a small installation space.

According to embodiments of the invention, a seat adjusting device and a method of providing seat adjustment as defined by the independent claims are provided. The dependent claims define features of further embodiments.

According to the invention, a seat adjusting device comprises a control valve which is configured as a 4/4-way valve, i.e., which has four working ports and four positions. A first inflatable chamber is in communication with a first port of the control valve. A second inflatable chamber is in communication with a second port of the control valve. The control valve may be used to control inflation and deflation of both the first inflatable chamber and the second inflatable chamber.

According to exemplary embodiments, the control valve may have a third port which communicates with a fluid supply channel. In operation, a pressurized fluid, in particular gas, may be supplied at the third port. The control valve may have a fourth port which communicates with a fluid discharge channel. The control valve may be configured such that, in a first position of the control valve, the first port is in communication with the third port, while there is no fluid communication between the first port and the fourth port, no fluid communication between the second port and the third port, and no fluid communication between the second port and the fourth port. The control valve may be configured such that, in a second position of the control valve, the second port is in communication with the third port, while there is no fluid communication between the second port and the fourth port, no fluid communication between the first port and the third port, and no fluid communication between the first port and the fourth port. The control valve may be configured such that, in a third position of the control valve, the first port is in communication with the fourth port, while there is no fluid communication between the second port and the third port, and no fluid communication between the second port and the fourth port. The control valve may be configured such that, in a fourth position of the control valve, the second port is in communication with the fourth port, while there is no fluid communication between the first port and the third port, and no fluid communication between the first port and the fourth port.

The control valve may be configured such that, in each one of the four positions of the control valve, there is no fluid communication between the first port and the second port.

According to exemplary embodiments, the control valve may have a first solenoid and a second solenoid. The first and second solenoids may be energized independently from each other, to thereby implement the four positions of the valve. The control valve may have a first armature which is displaced against a bias force when the first solenoid is supplied with energy. The control valve may have a second armature which is displaced against a bias force when the second solenoid is supplied with energy. Displacement of each armature may respectively cause one of the ports of the control valve to become closed or opened.

A seat adjusting device according to an embodiment comprises a plurality of inflatable chambers and a valve module. The plurality of inflatable chambers includes a first inflatable chamber and a second inflatable chamber. The valve module comprises a control valve which is a 4/4-way valve having four ports and four positions. A first port of the control valve is in communication with the first inflatable chamber and a second port of the control valve is in communication with the second inflatable chamber.

The control valve may comprise an internal channel and a first solenoid. The control valve may be configured such that the internal channel is in communication with the first port when the first solenoid is deenergized and that the internal channel is in communication with the second port when the first solenoid is energized. The control valve may be configured such that the internal channel is not in communication with the second port when the first solenoid is deenergized and that the internal channel is not in communication with the first port when the first solenoid is energized. By selectively supplying energy to the first solenoid, one of the first inflatable chamber and the second inflatable chamber connected to the control valve may be selected for inflating or deflating.

The control valve may comprise a second solenoid. The control valve may be configured such that the internal channel is in communication with a third port of the control valve when the second solenoid is deenergized and that the internal channel is in communication with a fourth port of the control valve when the second solenoid is energized. The control valve may be configured such that the internal channel is not in communication with the third port of the control valve when the second solenoid is energized and that the internal channel is not in communication with the fourth port of the control valve when the second solenoid is deenergized. By selectively supplying energy to the second solenoid, an inflatable chamber may be deflated. By activating a pressure fluid source, e.g. a pump, a gas or other fluid may be supplied to an inflatable chamber when the second solenoid is deenergized.

The third port may be in communication with a fluid supply channel of the valve module. The fourth port may be in communication with a fluid discharge channel of the valve module. In operation, gas or another working fluid may be supplied via the third port to an inflatable chamber through the control valve. Gas or another working fluid may be discharged from an inflatable chamber through the control valve and via the fourth port.

The fluid supply channel and the fluid discharge channel may be delimited by walls of a housing of the valve module.

The seat adjusting device may comprise a pressure fluid source coupled to the fluid supply channel. The pressure fluid source may comprise a pump which provides gas under positive pressure to the valve module. The pressure fluid source may be an air pump. The pressure fluid source may have an integrated one-way valve.

The valve module may comprise a fluid supply control valve connected between the fluid supply channel and the pressure fluid source. The fluid supply control valve may be a 2/2-way control valve. The valve module may have plural fluid supply control valves which are respectively connected between a fluid supply channel and the pressure fluid source.

The control valve may comprise a metal core around which both the first solenoid and the second solenoid are wound. The internal channel may be formed in the metal core. First and second armatures may be provided in the metal core. The first armature may be biased such that it is displaced in a first direction when the first solenoid is energized. The second armature may be biased such that it is displaced in a second direction opposite to the first direction when the second solenoid is energized. Thereby, the risk of undesired displacement of the first armature by energizing the second solenoid, and vice versa, may be mitigated.

The seat adjusting device may comprise a controller for controlling energy supplied to the first solenoid and the second solenoid. The controller may be configured such that energy supplied to the first and second solenoids can be controlled independently for the first solenoid and the second solenoid.

The valve module may have a housing which has plural exterior walls. The first port of the control valve may be in communication with a first connector and the second port of the control valve may be in communication with a second connector. The first connector and the second connector may be provided on the same exterior wall of the housing. The first connector and the second connector may be provided on a planar lateral side wall of the housing.

One of the first inflatable chamber and the second inflatable chamber may be a lumbar support chamber. The other one of the first inflatable chamber and the second inflatable chamber may be a side support chamber. By controlling a side support chamber and a lumbar support chamber using one 4/4-way valve, the control operations required in normal operation may be readily implemented with one 4/4-way control valve.

The valve module may comprise at least one further 4/4-way valve. The at least one further 4/4-way valve may have a first port in communication with another lumbar support chamber and a second port in communication with another side support chamber. Thereby, independent control of two inflatable chambers of a lumbar support and/or of two inflatable chambers of a side support may be realized with a valve module which has two 4/4-way valves.

According to another embodiment, there is provided a seat which includes the seat adjusting device of any aspect or embodiment. The seat may be a vehicle seat. At least one of the inflatable chambers may be mounted at a lumbar support region of the seat. At least one of the inflatable chambers may be mounted at a side support of the seat.

According to the invention, a method of providing seat adjustment by controlling a control valve to selectively supply fluid to a plurality of inflatable chambers or to selectively discharge fluid from the plurality of inflatable chambers is provided. The method comprises controlling a control valve which is a 4/4-way valve having four ports and four positions, a first port of the control valve being in communication with the first inflatable chamber and a second port of the control valve being in communication with the second inflatable chamber.

The control valve may have a first solenoid and a second solenoid. The controlling may comprises selectively energizing the first solenoid and/or the second solenoid to set the control valve to a desired one of the four positions.

Further features of the method and the effects attained thereby correspond to features of the seat adjusting device of embodiments. The method may be performed using the seat adjusting device of any one aspect or embodiment.

Embodiments of the invention may be used for providing seat adjustment in seats, in particular in vehicle seats. Embodiments of the invention may be used for providing contour adjustment of a seat surface. Embodiments may be used for providing seat adjustments in car seats, without being limited thereto.

### Brief description of drawings

Embodiments of the invention will be described with reference to the accompanying drawings, wherein like reference numerals refer to like elements.
FIG. 1 is a schematic view of a seat having a seat adjusting device according to an embodiment.
FIG. 2 is a view of a seat adjusting device according to an embodiment.
FIG. 3 is an exploded perspective view of a valve module of a seat adjusting device according to an embodiment.
FIG. 4, FIG. 5, FIG. 6 and FIG. 7 are sectional views of a control valve of the valve module, showing four positions of the control valve.
FIG. 8 is an exploded perspective view of a valve module of a seat adjusting device according to another embodiment.
FIG. 9 is an exploded perspective view of a valve module of a seat adjusting device according to another embodiment.
FIG. 10 is a plan view of a housing portion of the valve module of FIG. 9 which may be used to define fluid channels.
FIG. 11, FIG. 12, FIG. 13 and FIG. 14 are sectional views of a control valve of the valve module of FIG. 9, showing four positions of the control valve.
FIG. 15, FIG. 16, FIG. 17 and FIG. 18 are sectional views through a pair of fluid supply control valves of the valve module of FIG. 9, showing the different positions of a pair of fluid supply control valves.

### Detailed description of embodiments

Exemplary embodiments of the invention will be described with reference to the drawings. While some embodiments will be described in the context of specific fields of application, such as in the context of automotive vehicle seating, the embodiments are not limited to this field of application. The features of the various embodiments may be combined with each other unless specifically stated otherwise. In any one embodiment described herein, the fluid may be a gas. The fluid may in particular be air. The fluid may be supplied by a pressure fluid source which may be a pump. According to conventional terminology in this field, two elements are referred to as being "in communication" with each other when the fluid can flow between the two elements.

According to embodiments, a seat adjusting device is provided which uses a 4/4-way control valve. According to conventional pneumatic nomenclature, the term X/Y-control valve, with X and Y being integers, refers to a valve which has X ports and Y positions. Accordingly, a control valve which is configured as a 4/4-way valve has four ports and four positions. As will be described in more detail with reference to the drawings, such a 4/4-way valve may be used to selectively inflate or deflate a first inflatable chamber and a second inflatable chamber. The inflatable chambers may be resilient bladders or other resilient members which may be installed in a seat. The inflatable chambers may be installed such that seat surface contour changes as the inflatable chamber are inflated or deflated. As will be explained in more detail below, a great degree of control over the inflatable chambers may be attained by using a valve module which includes at least one 4/4-way valve, while keeping the total count of valves moderate. For illustration, a total of four inflatable chambers provided in a lumbar support and/or side support region of the seat may be controlled using two 4/4-way control valves. Two inflatable chambers may both be inflated and deflated through the same 4/4-way valve.

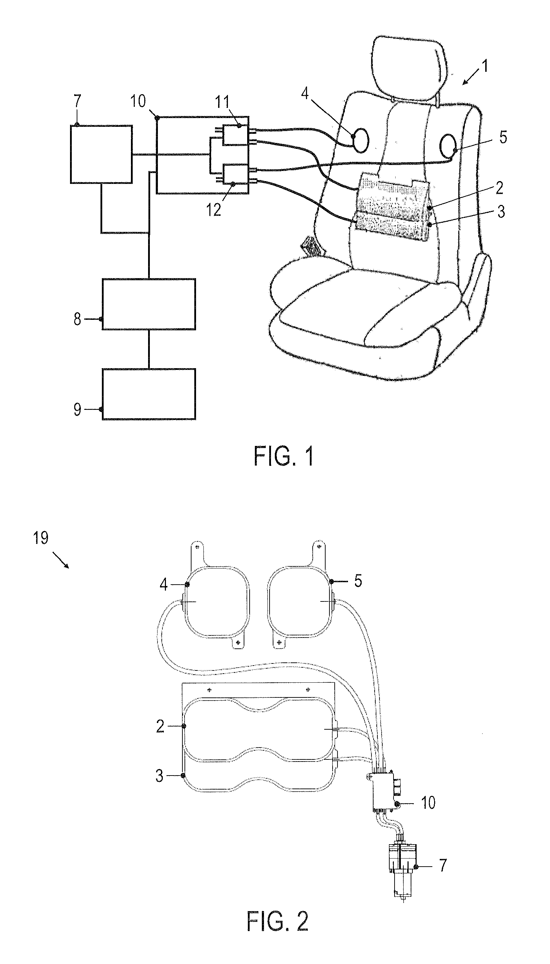

FIG. 1 is a schematic view of a vehicle seat 1 having a seat adjusting device according to an embodiment. The seat adjusting device includes inflatable fluid chambers configured as bladders. Some of the bladders may be such that it may be desirable to selectively increase, decrease or hold an amount of fluid introduced thereinto. This may be desirable when the bladder constitutes a mechanism for adjusting a seat contour over extended time periods, such as an adjustable lumbar support. Alternatively or additionally, some of the bladders may be configured such that the amount of fluid introduced thereinto is increased or decreased during operation, while the amount of fluid does not need to be kept constant at a pressure greater than ambient pressure over extended time period. This may be desirable for bladders constituting, for example, massage units where pressure in the bladders is continuously adjusted.

For illustration rather than limitation, the seat 1 includes an adjustable lumbar support and an adjustable side support. The lumbar support includes inflatable fluid chambers, which are configured as inflatable bladders 2, 3. The bladders 2, 3 are configured to change their exterior dimensions when a fluid pressure in the respective bladder is adjusted. Bladders 2, 3 are provided at a lower portion of the backrest of the vehicle seat 1 and are offset relative to each other in a longitudinal direction of the backrest. By inflating or deflating all bladders 2, 3, the amount of curvature in the lower backrest portion may be adjusted. By inflating one of the bladders 2, 3 while deflating another one, the apex position may be shifted. Thereby, a four-way lumbar support device may be implemented. The side support unit includes a pair of bladders 4, 5 arranged on lateral sides of the seat 1. While a lumbar support device and side support unit are shown in FIG. 1, the seat 1 may alternatively or additionally include seat adjusting devices arranged at other locations. Some of the bladders 2-5 illustrated in FIG. 1 may also be omitted. For illustration, instead of or in addition to the lumbar support device, bladders may be provided in the seat part below the user's thighs to provide massage functions.

The seat adjusting device further includes a pressure fluid source 7, a valve module 10, a control circuit 8 and a manual control device 9. The pressure fluid source 7 is configured to provide a fluid, in particular a gas, to the valve module 10 at positive pressure. The pressure fluid source 7 may include a pump which supplies gas to the valve module 10. The valve module 10 is configured to receive the gas provided by the pressure fluid source 7 and to supply the gas to bladders installed in the seat 1. Actuation of the pressure fluid source 7 and of the valve module 10 may be controlled by the control circuit 8 which is electrically connected to the pressure fluid source 7 and the valve module 10. Control signals may be generated by the control circuit 8 in response to an adjustment made at the manual control device 9, for example. Alternatively, control signals may be generated by the control circuit 8 in response to a user identification or user profile received from a vehicular board network.

The valve module 10 includes a plurality of valves. The valves may be arranged in a housing of the valve module 10. The valve module 10 may include at least on control valve configured as 4/4-way valve. The valve module 10 may include at least two 4/4-way valves 11, 12. In implementations, a 4/4-way valve 11 may be provided for supplying fluid to a lumbar support bladder and to a side support bladder. Another 4/4-way valve 12 may be provided for supplying fluid to another lumbar support bladder and to a side support bladder. The valve module 10 may optionally include other control valves or other valves, such as check valves.

FIG. 2 illustrates a seat adjusting device 19 of an embodiment in a state in which it is not mounted to the seat 1.

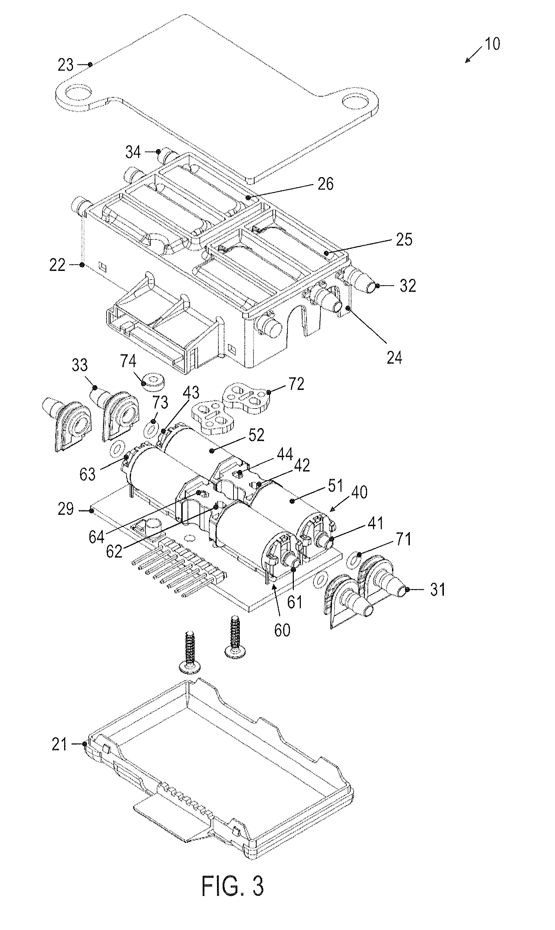

The configuration of the valve module 10 in seat adjusting devices according to exemplary embodiments will next be described with reference to FIG. 3 to FIG. 18. FIG. 3 is an exploded perspective view of the valve module 10. The valve module 10 includes a housing having a main housing portion 22, an end portion 21, and a closure plate 23. The valve module 10 includes a control valve 40 which is configured as a 4/4-way valve. The valve module 10 may include a second control valve 60 configured as a 4/4-way valve. The valve module 10 may include a circuit board 29, to which the control valve 40 and the second control valve 60 may be attached using fasteners. The circuit board 29 has connectors for energizing the control valve 40 and the second control valve 60 and/or for supplying power and control signals to the control valve 40 and the second control valve 60.

The control valve 40 has a first port 41, a second port 42, a third port 43, and a fourth port 44. The first port 41 may be in communication with a first inflatable chamber, e.g. with a lumbar support bladder. The second port 42 may be in communication with a second inflatable chamber, e.g. with a side support bladder. The third port 43 may be in communication with a fluid supply channel. The fluid supply channel may be formed by a tube, e.g. a plastic tube as shown in FIG. 1 and FIG. 2, which connects the pressure fluid source 7 to a connector 33 associated with the third port 43. Alternatively or additionally, the fluid supply channel may also include a section formed within the housing of the valve module. The fourth port 44 may be in communication with a fluid discharge opening 34 of the valve module 10. The fourth port 44 may be in communication with the fluid discharge opening 34 via a fluid discharge channel 26. The fluid discharge channel 26 may be defined by the main housing portion 22 and the end plate 23.

A first connector 31 for attachment of a tube or other fluid guide may be associated with the first port 41 of the control valve 40. A second connector 32 for attachment of a tube or other fluid guide may be associated with the second port 42 of the control valve 40. A fluid channel 25 may be formed in the housing of the valve module for communication between the second port 42 and the second connector 32. When the valve module 10 is used in a seat adjusting device, a first tube may be attached to the first connector 31 for communication between the first port 41 and the first inflatable chamber. A second tube may be attached to the second connector 32 for communication between the second port 42 and the second inflatable chamber. The fluid channel 25, the first port 41 and the second port 42 may be arranged such that the first connector 31 and the second connector 32 may be provided on the same side wall 24 of the housing of the valve module 10. The fluid supply opening 33 may be provided on an opposing side wall of the housing of the valve module 10. Thereby, the required connections can be established with moderate overall bending of tubes which connect the various elements of the seat adjusting device.

The second control valve 60 which is also a 4/4-way valve may have the same configuration as the control valve 40. In particular, the second control valve 60 may have has a first port 61, a second port 62, a third port 63, and a fourth port 64 which are operative as described with reference to the control valve 40.

The valve module 10 may include additional elements. For illustration, a seal member 71 may be provided to establish a fluid-tight connection between the first port 41 and the first connector 31. Another seal member 73 may be provided to establish a fluid-tight connection between the third port 43 and the fluid supply opening 33. Another seal member 72 may be interposed between a valve body of the control valve 40 and the main housing portion 22, to provide a fluid-tight connection between the second port 42 and the fluid channel 25 and/or to provide a fluid-tight connection between the fourth port 44 and the fluid discharge channel 26. A pressure sensor 74 may be integrated into the housing of the valve module 10. The pressure sensor 74 may be arranged such, in a valve position in which the control valve 40 supplies fluid to an inflatable chamber, the respective inflatable chamber communicates with the pressure sensor 74 through the control valve 40. This similarly applies to pressure sensing for inflatable chambers which are inflated or deflated via the second control valve 60.

The first port 41 may be in communication with a first inflatable chamber, e.g. with a lumbar support bladder. The second port 42 may be in communication with a second inflatable chamber, e.g. with a side support bladder. The third port 43 may be in communication with a fluid supply channel. The fluid supply channel may be formed by a tube, e.g. a plastic tube as shown in FIG. 1 and FIG. 2, which connects the pressure fluid source 7 to a connector 33 associated with the third port 43. Alternatively or additionally, the fluid supply channel may also include a channel formed within the housing of the valve module 10. The fourth port 44 may be in communication with a fluid discharge opening 34 of the valve module 10. The fourth port 44 may be in communication with the fluid discharge opening 34 via a fluid discharge channel 26. The fluid discharge channel 26 may be defined by the main housing portion 22 and the end plate 23. A separate fluid supply opening may be provided for the second control valve 60. In this case, two separate tubes may be used to supply gas or another working fluid to the control valve 40 and the second control valve 60. Both tubes may be connected to the same pump. Alternatively, the third port 43 of the control valve 40 and the third port 63 of the second control valve 60 may both be in communication with the same fluid supply opening of the valve module.

The control valve 40 and the second control valve 60 respectively have four working positions. The operation of the control valve 40 will be described in more detail below, it being understood that the second control valve 60 may operate in the same way and may have the same configuration.

The control valve 40 has a first position. In the first position, the first port 41 may be in communication with the third port 43, while the second port 42 is not in communication with the third port 43. In the first position, the first port 41 and the second port 42 may be not in communication with the fourth port 44. When the control valve 40 is set to the first position and the pressure fluid source 7 does not supply gas or another working fluid, the fluid pressure in the first and second inflatable chambers can be kept constant. When the control valve 40 is set to the first position and the pressure fluid source 7 is activated, the first inflatable chamber is inflated while the fluid pressure in the second inflatable chamber can be kept constant.

The control valve 40 has a second position. In the second position, the second port 42 may be in communication with the third port 43, while the first port 41 is not in communication with the third port 43. In the second position, the first port 41 and the second port 42 may be not in communication with the fourth port 44. When the control valve 40 is set to the second position and the pressure fluid source 7 does not supply gas or another working fluid, the fluid pressure in the first and second inflatable chambers can be kept constant. When the control valve 40 is set to the second position and the pressure fluid source 7 is activated, the second inflatable chamber is inflated while the fluid pressure in the first inflatable chamber can be kept constant.

The control valve 40 has a third position. In the third position, the first port 41 may be in communication with the fourth port 44, while the second port 42 is not in communication with the fourth port 44. In the third position, the first port 41 and the second port 42 may be not in communication with the third port 43. When the control valve 40 is set to the third position, the first inflatable chamber is deflated, with fluid flowing from the first port 41 to the fourth port 44 through the control valve 40. When the control valve 40 is set to the third position, the fluid pressure in the second inflatable chamber can be kept constant.

The control valve 40 has a fourth position. In the fourth position, the second port 42 may be in communication with the fourth port 44, while the first port 41 is not in communication with the fourth port 44. In the fourth position, the second port 42 and the first port 41 may be not in communication with the third port 43. When the control valve 40 is set to the fourth position, the second inflatable chamber is deflated, with fluid flowing from the second port 42 to the fourth port 44 through the control valve 40. When the control valve 40 is set to the fourth position, the fluid pressure in the second inflatable chamber can be kept constant.

A check valve or other one-way valve which prevents fluid from flowing from the first port 43 to the pressure fluid source may be provided. The one-way valve may be provided within the valve module 10. The one-way valve may also be provided at another suitable location. The one-way valve may be integrated into the pump which supplies gas to the valve module. Thereby, an undesired deflation of the first and second inflatable chambers can be prevented when the pressure fluid source 7 is not activated. Instead of or in addition to a one-way valve, a fluid supply control valve which may be a 2/2-way valve may be used to selectively bring the pressure fluid source 7 into communication with the first port or to terminate this communication.

Using the control valve 40 with the above configuration and operation, the following operations can be performed: To maintain the fluid pressure in the first and second inflatable chambers, the control valve 40 may be set to the first position while the pressure fluid source 7 is not activated. To inflate the first inflatable chamber (e.g. a lumbar support bladder) while maintaining the fluid pressure in the second inflatable chamber (e.g. a side support bladder), the control valve 40 may be set to the first position and the pressure fluid source 7 may be activated. To inflate the second inflatable chamber while maintaining the fluid pressure in the first inflatable chamber, the control valve 40 may be set to the second position and the pressure fluid source 7 may be activated. To deflate the first inflatable chamber while maintaining the fluid pressure in the second inflatable chamber, the control valve 40 may be set to the third position. To deflate the second inflatable chamber while maintaining the fluid pressure in the first inflatable chamber the control valve 40 may be set to the fourth position.

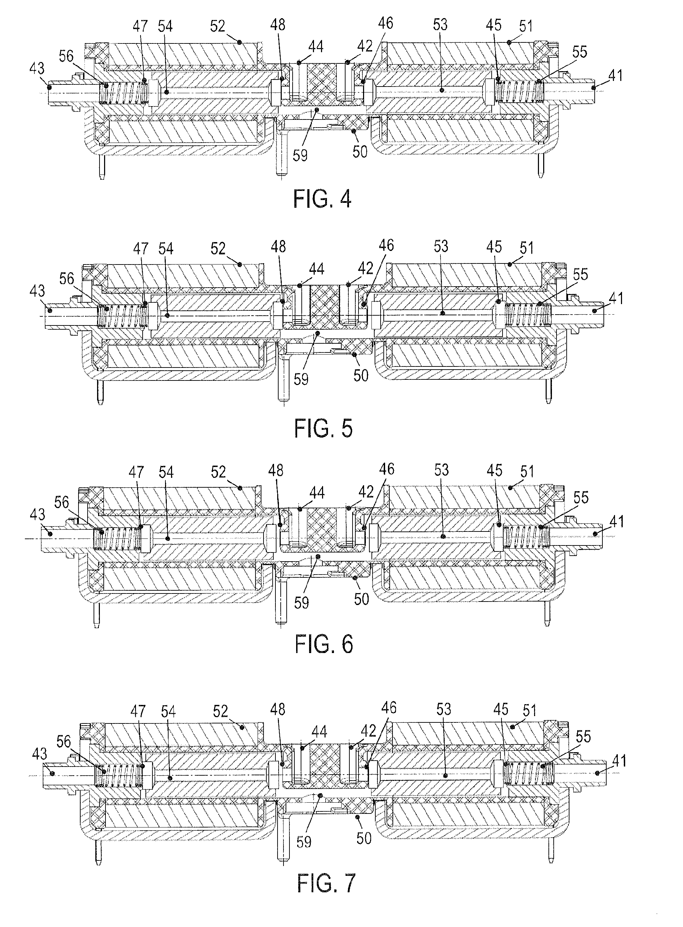

Various configurations of the control valve 40 may be used to implement 4/4-way valve functionality. A configuration will be explained in more detail with reference to FIG. 4 to FIG. 7. The control valve 40 may include a first solenoid 51 and a second solenoid 52. By selectively energizing or deenergizing the first solenoid 51 and the second solenoid 52, a total of four different valve positions may be realized.

FIG. 4 to FIG. 7 show cross-sectional views along an axial direction of the control valve 40. The control valve 40 having this configuration may be used as control valve in a seat adjusting device of an embodiment. Generally, the control valve 40 includes a valve body. A core 50 which may be formed from metal may extend along the axial direction of the control valve 40. The first solenoid 51 and the second solenoid 52 may be arranged on the core 50. The first solenoid 51 and the second solenoid 52 may be wound around the core 50. The control valve 40 has an internal channel 59. The internal channel 59 may be formed in the core 50.

The control valve 40 may have a first element 53 which is displaceable under the action of the first solenoid 51. The first element 53 may be a first armature. The first element 53 may comprise or may be formed from a magnetic material, e.g. from a paramagnetic or ferromagnetic material. The first element 53 may be biased by a first bias means 55. The first bias means 55 may be a first spring. The first element 53 may selectively engage a first sealing area 45 associated with the first port 41 or a second sealing area 46 associated with the second port 42. When the first solenoid 51 is deenergized, the first bias means 55 forces the first element 53 against the second sealing area 46. Thereby, communication between the internal channel 59 and the second port 42 is interrupted, while the first port 41 communicates with the internal channel 59. When the first solenoid 51 is energized, the first element 53 is displaced against the force of the first bias means 55, is engaged with the first sealing area 45 and disengages from the second sealing area 46. Thereby, communication between the internal channel 59 and the second port 42 is established, while communication between the first port 41 and the internal channel 59 is interrupted. The first element 53 may have a first head at a first axial end for engaging the first sealing area 45. The first element 53 may have a second head at a second axial end for engaging the second sealing area 46. The first and second sealing areas 45, 46 may respectively include a projection which extends circumferentially about the respective valve port.

The control valve may have a second element 54 which is displaceable under the action of the second solenoid 52. The second element 54 may be a second armature. The second element 54 may comprise or may be formed from a magnetic material, e.g. from a paramagnetic or ferromagnetic material. The second element 54 may be biased by a second bias means 56. The second bias means 56 may be a second spring. The second element 54 may selectively engage a third sealing area 47 associated with the third port 43 or a fourth sealing area 48 associated with the fourth port 44. When the second solenoid 52 is deenergized, the second bias means 56 forces the second element 54 against the fourth sealing area 48, while the second element 54 is disengaged from the third sealing area 47. Thereby, communication between the internal channel 59 and the fourth port 44 is interrupted, while the third port 43 communicates with the internal channel 59. When the second solenoid 52 is energized, the second element 54 is displaced against the force of the second bias means 56, is engaged with the third sealing area 47 and disengages from the fourth sealing area 48. Thereby, communication between the internal channel 59 and the fourth port 44 is established, while communication between the third port 43 and the internal channel 59 is interrupted. The second element 54 may have a first head at a first axial end for engaging the third sealing area 47. The second element 54 may have a second head at a second axial end for engaging the fourth sealing area 48. The third and fourth sealing areas 47, 48 may respectively include a projection which extends circumferentially about an inner end of the respective valve port.

In the control valve 40 having such a configuration, the first solenoid 51 is operative to select one of the first port 41 and the second port 42 for an inflation or deflation operation. The second solenoid 52 is operative to select between a communication with the third port 43 for inflation (pressure fluid source 7 activated) or maintaining pressure (pressure fluid source 7 not activated) and a communication with the fourth port 44 for deflation. The second solenoid 52, associated armature 54 and arrangement of the third port 43 and fourth port 44 may be selected such that communication with the fourth port 44 for deflation is established only when the second solenoid 52 is energized.

FIG. 4 shows the control valve 40 when the first solenoid 51 and the second solenoid 52 are deenergized. This corresponds to the first position of the control valve 40. The first port 41 is in communication with the third port 43 but not with the fourth port 44, while the second port 42 is not in communication with the third port 43 and is not in communication with the fourth port 44. FIG. 5 shows the control valve 40 when the first solenoid 51 is energized and the second solenoid 52 is deenergized. This corresponds to the second position of the control valve 40. The second port 42 is in communication with the third port 43 but not with the fourth port 44, while the first port 41 is not in communication with the third port 43 and is not in communication with the fourth port 44. FIG. 6 shows the control valve 40 when the first solenoid 51 is deenergized and the second solenoid 52 is energized. This corresponds to the third position of the control valve 40. The first port 41 is in communication with the fourth port 44 but not with the third port 43, while the second port 42 is not in communication with the third port 43 and is not in communication with the fourth port 44. FIG. 7 shows the control valve 40 when the first solenoid 51 is energized and the second solenoid 52 is energized. This corresponds to the fourth position of the control valve 40. The second port 42 is in communication with the fourth port 44 but not with the third port 43, while the first port 41 is not in communication with the third port 43 and is not in communication with the fourth port 44.

While the operation and a configuration of the control valve 40 of an exemplary embodiment were described in detail, the second control valve 60 may have an identical operation and configuration. It will be appreciated that the seat adjusting device which includes the valve module 10 also allows both side support bladders to be inflated simultaneously via the control valve 40 and the second control valve 60, with each one of the control valve 40 and the second control valve 60 supplying gas or another working fluid to an associated side support bladder. Alternatively or additionally, the seat adjusting device which includes the valve module 10 also allows both lumbar support bladders to be inflated simultaneously via the control valve 40 and the second control valve 60, with each one of the control valve 40 and the second control valve 60 supplying gas or another working fluid to an associated lumbar support bladder. Fluid exchange between inflatable chambers may be prevented.

Additional valves may be used in the seat adjusting device to provide even further enhanced levels of control. For illustration, at least one 2/2-way control valve may be integrated into the valve module. The 2/2-way control valve may be connected to a fluid supply channel or a fluid discharge channel of at least one of the control valve 40 and the second control valve 60. By using such a 2/2-way control valve, individual control of the various inflatable chambers may be enhanced.

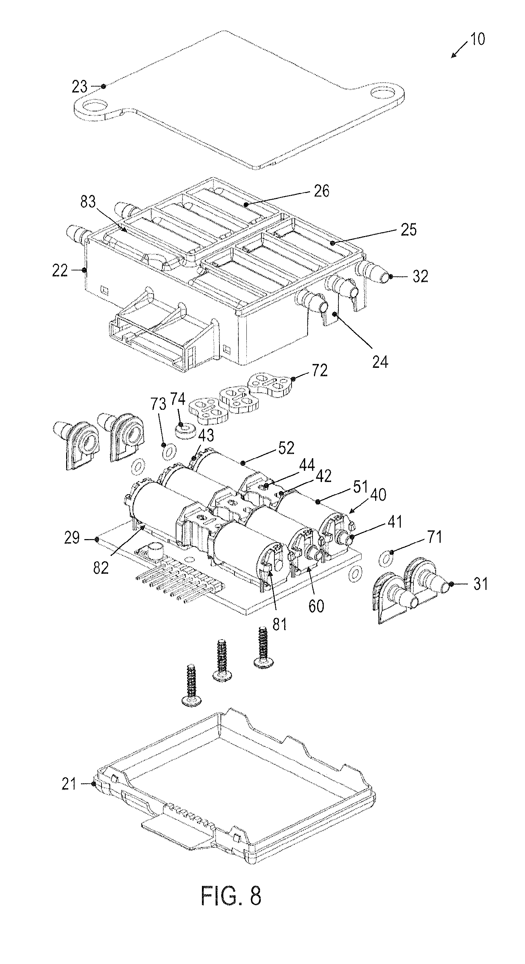

FIG. 8 is an exploded perspective view of a valve module 10 which may be used in a seat adjusting device of another embodiment. The valve module 10 includes at least one 4/4-way control valve. The valve module 10 may include a control valve 40 and second control valve 60 configured as explained with reference to FIG. 3 to FIG. 7.

The valve module 10 includes a first additional control valve 81 which may be a 2/2-way control valve. The first additional control valve 81 may be connected between a third port of one of the 4/4-way control valves 40, 60 and a fluid supply opening of the valve module 10. The first additional control valve 81 may be connected between a fourth port of one of the 4/4-way control valves 40, 60 and a fluid discharge opening of the valve module 10. The second additional control valve 82 may be connected between a third port of the other one of the 4/4-way control valves 40, 60 and a fluid supply opening of the valve module 10. The second additional control valve 82 may be connected between a fourth port of the other one of the 4/4-way control valves 40, 60 and a fluid discharge opening of the valve module 10. Communication between ports of the additional control valve(s) 81, 82 and ports of the 4/4-way control valves 40, 60 may be established by channels formed by the housing of the valve module 10. For illustration, a surface 83 of the main housing portion 22 which faces the end plate 23 may have concavities to define channels which connect ports of the additional control valve(s) 81, 82 and ports of the 4/4-way control valves 40, 60.

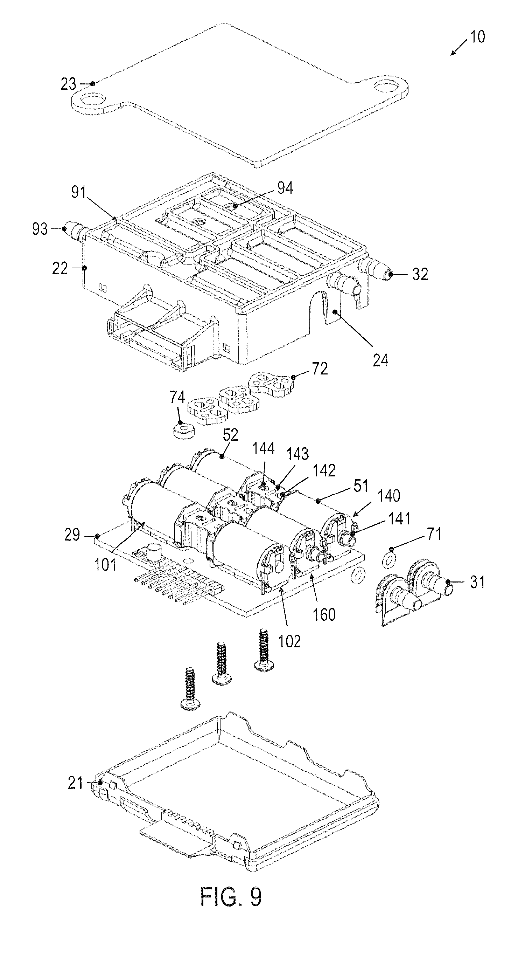

FIG. 9 is an exploded perspective view of a valve module 10 which may be used in a seat adjusting device of another embodiment. The valve module 10 includes at least one 4/4-way control valve. The valve module 10 may include a control valve 140 which is a 4/4-way control valve. The valve module 10 may include a second control valve 160 which is a 4/4-way control valve. The positions and operation of the control valve 140 and the second control valve 160 are similar to the ones of the control valve 40 and will be explained in more detail below.

The valve module 10 includes a first fluid supply control valve 101. The first fluid supply control valve 101 may be a 2/2-way valve. The first fluid supply control valve 101 may be operative to control fluid flow from the pressure fluid source 7 to the control valve 140. The valve module 10 includes a second fluid supply control valve 102. The second fluid supply control valve 102 may be a 2/2-way valve. The second fluid supply control valve 102 may be operative to control fluid flow from the pressure fluid source 7 to the second control valve 160. The first fluid supply control valve 101, the second fluid supply control valve 102, the control valve 140 and the second control valve 160 may be attached to the circuit board 29. Control of the first fluid supply control valve 101, the second fluid supply control valve 102, the control valve 140 and the second control valve 160 may be attained by electrical signals and/or electrical power supply through the circuit board 29.

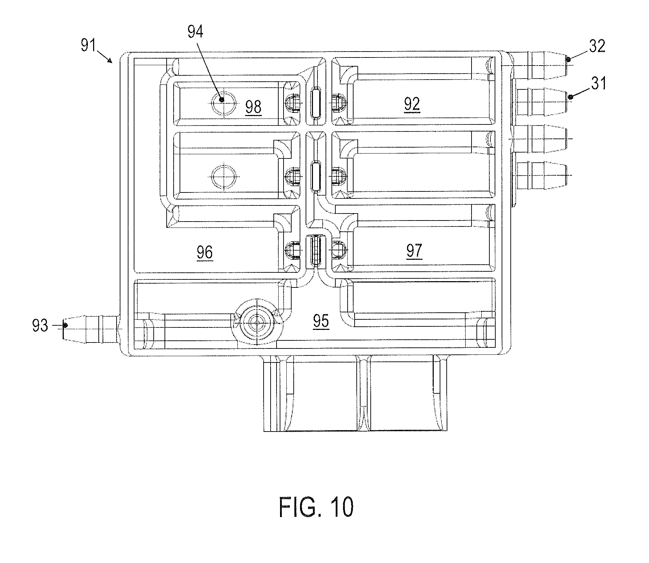

The housing of the valve module 10 may define a fluid supply channel for establishing fluid communication between an outlet port of the first fluid supply control valve 101 and a third port 143 of the control valve 140. The housing of the valve module 10 may define a fluid supply channel for establishing fluid communication between an outlet port of the second fluid supply control valve 102 and a third port of the second control valve 160. To this end, a surface 91 of the main housing portion 22 which faces the end plate 23 may have recesses that define channels. The channels may also establish fluid communication between a fluid supply opening 93 of the valve module and an inlet port of the first and second fluid supply control valves 101, 102. The surface 91 of the main housing portion 22 may also have one or several discharge openings 94 for passage of fluid that is discharged. A configuration of channels in one implementation is explained in more detail with reference to FIG. 10.

FIG. 10 shows a plan view of the surface 91 of the main housing portion 22. The surface 91 may include a recess 95 which defines a channel through which fluid received at the fluid supply opening 93 is guided to the inlet port of the first and second fluid supply control valves 101, 102. The surface 91 may include a recess 96 which defines a channel through which gas can flow from the outlet port of the first fluid supply control valve 101 to the third port of the control valve 140. The surface 91 may include a recess 97 which defines a channel through which gas can flow from the outlet port of the second fluid supply control valve 102 to the third port of the second control valve 160. Additional channels may be incorporated into the housing of the valve module. For illustration, a recess 92 formed in the surface 91 may define a channel through which fluid can flow between a second port of the control valve 140 and the second connector 32, for inflation or deflation of the second inflatable chamber. For further illustration, a recess 98 may be formed in the surface 91 through which gas discharged from a fourth port of the control valve 140 may flow to a discharge opening 94.

Operation of the control valve 140 and the second control valve 160 and a configuration of the control valve 140 and the second control valve 160 will be explained in more detail next.

The control valve 140 has a first position. In the first position, the first port 141 may be in communication with the third port 143, while the second port 142 is not in communication with the third port 143. In the first position, the first port 141 and the second port 142 may be not in communication with the fourth port 144. When the control valve 140 is set to the first position and the first fluid supply control valve 101 is in a closed state in which it does not pass gas or another working fluid to the third port 143, the fluid pressure in the first and second inflatable chambers can be kept constant. When the control valve 140 is set to the first position, the pressure fluid source 7 is activated, and the first fluid supply control valve 101 is set to an open state in which it passes fluid received from the pressure fluid source 7 at the input port 103 to the output port 104, the first inflatable chamber is inflated while the fluid pressure in the second inflatable chamber can be kept constant.

The control valve 140 has a second position. In the second position, the second port 142 may be in communication with the third port 143, while the first port 141 is not in communication with the third port 143. In the second position, the first port 141 and the second port 142 may be not in communication with the fourth port 144. When the control valve 140 is set to the second position and the first fluid supply control valve 101 is set to the closed state in which it does no pass gas or another working fluid to the third port 143, the fluid pressure in the first and second inflatable chambers can be kept constant. When the control valve 140 is set to the first position, the pressure fluid source 7 is activated, and the first fluid supply control valve 101 is set to the open state in which it passes fluid received from the pressure fluid source 7 at the input port 103 to the output port 104, the second inflatable chamber is inflated while the fluid pressure in the first inflatable chamber can be kept constant.

The control valve 140 has a third position. In the third position, the first port 141 may be in communication with the fourth port 144, while the second port 142 is not in communication with the fourth port 144. It is not required that, when the control valve 140 is in the third position, the first port 141 and the second port 142 are disconnected from the third port 143, because discharge of fluid towards the pressure fluid source may be prevented by setting the first fluid supply control valve 101 to the closed state in which gas is prevented from flowing between the input port 103 and the output port 104. When the control valve 140 is set to the third position, the first inflatable chamber is deflated, with fluid flowing from the first port 141 to the fourth port 144 through the control valve 140. When the control valve 140 is set to the third position, the fluid pressure in the second inflatable chamber can be kept constant.

The control valve 140 has a fourth position. In the fourth position, the second port 142 may be in communication with the fourth port 144, while the first port 141 is not in communication with the fourth port 144. It is not required that, when the control valve 140 is in the fourth position, the first port 141 and the second port 142 are disconnected from the third port 143, because discharge of fluid towards the pressure fluid source may be prevented by setting the first fluid supply control valve 101 to the closed state. When the control valve 140 is set to the fourth position, the second inflatable chamber is deflated, with fluid flowing from the second port 142 to the fourth port 144 through the control valve 140. When the control valve 140 is set to the fourth position, the fluid pressure in the first inflatable chamber can be kept constant.

The operation and configuration of the second control valve 160 and associated second fluid supply control valve 102 may be the same as that of the control valve 140 and associated first fluid supply control valve 101.

Since the fluid supply control valves 101, 102 can be used to selectively pass fluid to the control valve 140 and/or the second control valve 160, no separate check valve must be provided to prevent fluid from flowing through the third port 143 of the control valve 140 towards the pressure fluid source 7. Rather, setting the fluid supply control valve 101 or 102 to the closed state may prevent undesired deflation.

The control valve 140 may include a first solenoid 51 to displace a first armature 53 and a second solenoid 52 to displace a second armature 54, similarly to the configuration of the control valve 40. By selectively energizing or deenergizing the first solenoid 51 and the second solenoid 52, a total of four different valve positions may be realized.

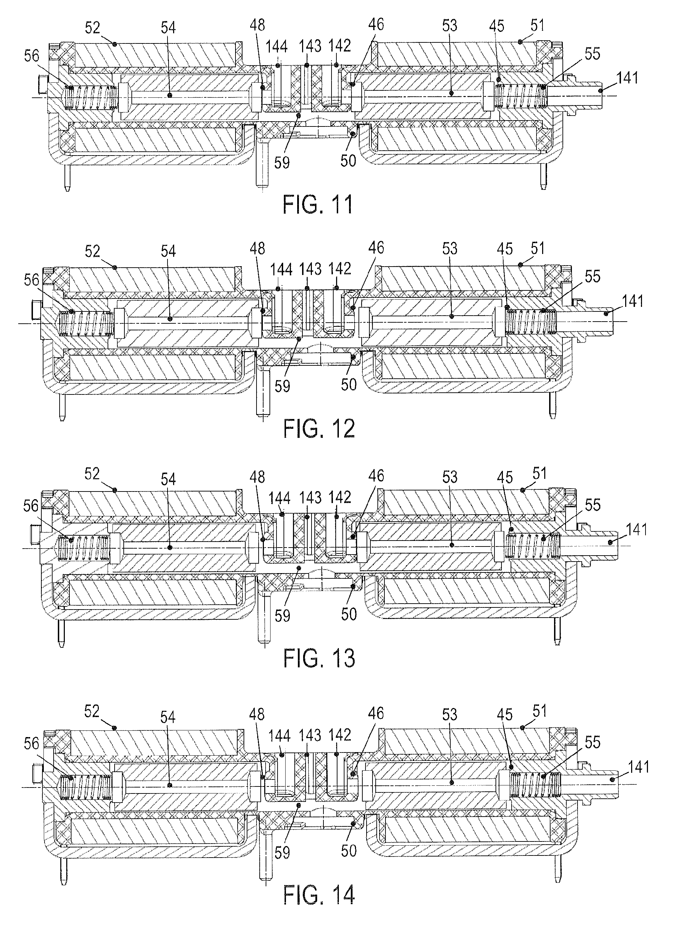

FIG. 11 to FIG. 14 show cross-sectional view along an axial direction of the control valve 140. The control valve 140 having this configuration may be used as control valve in a seat adjusting device of an embodiment. Generally, the control valve 140 includes a valve body. A core 50 which may be formed from metal may extend along the axial direction of the control valve 40. The first solenoid 51 and the second solenoid 52 may be arranged on the core 50. The first solenoid 51 and the second solenoid 52 may be wound around the core 50. The control valve 140 has an internal channel 59. The internal channel 59 may be formed in the core 50.

The control valve 140 may have a first element 53 which is displaceable under the action of the first solenoid 51. The operation and configuration of the first solenoid 51 and first element 53 may be as described with reference to FIG. 4 to FIG. 7. In particular, by energizing or deenergizing the first solenoid 51, one of the first inflatable chamber connected to the first port 141 or the second inflatable chamber connected to the second port 142 may be selected for inflation or deflation. The control valve 140 may have a second element 54 which is displaceable under the action of the second solenoid 52. The second element 54 may be an armature. A bias means 56, which may be a spring, may bias the second element 54 against a fourth sealing area 48. When the second solenoid 52 is energized, the second element 54 is displaced against the force of the bias means 56 to establish a communication between the fourth port 144 and one of the first and second ports 141, 142. It is not required to selectively open or close the third port 143. Fluid flow from the pressure fluid source 7 may be allowed using the fluid supply control valve 101, and fluid flow towards the pressure fluid source 7 may be suppressed by setting the fluid supply control valve 101 to the closed state.

In the control valve 140 having such a configuration, the first solenoid 51 is operative to select one of the first port 141 and the second port 142 for an inflation or deflation operation. The second solenoid 52 is operative to select between a communication with the third port 143 for inflation (pressure fluid source 7 activated and first fluid supply control valve 101 set to the open state) or maintaining pressure (pressure fluid source 7 not activated and/or first fluid supply control valve 102 set to the closed state) and a communication with the fourth port 144 for deflation.

FIG. 11 shows the control valve 140 when the first solenoid 51 and the second solenoid 52 are deenergized. This corresponds to the first position of the control valve 140. The first port 141 is in communication with the third port 143 but not with the fourth port 144, while the second port 142 is not in communication with the third port 143 and is not in communication with the fourth port 144. FIG. 12 shows the control valve 140 when the first solenoid 51 is energized and the second solenoid 52 is deenergized. This corresponds to the second position of the control valve 140. The second port 142 is in communication with the third port 143 but not with the fourth port 144, while the first port 141 is not in communication with the third port 143 and is not in communication with the fourth port 144. FIG. 13 shows the control valve 140 when the first solenoid 51 is deenergized and the second solenoid 52 is energized. This corresponds to the third position of the control valve 140. The first port 141 is in communication with the fourth port 144, while the second port 142 is not in communication with the third port 143 and is not in communication with the fourth port 144. FIG. 14 shows the control valve 140 when the first solenoid 51 is energized and the second solenoid 52 is energized. This corresponds to the fourth position of the control valve 140. The second port 142 is in communication with the fourth port 144, while the first port 141 is not in communication with the third port 143 and is not in communication with the fourth port 144.

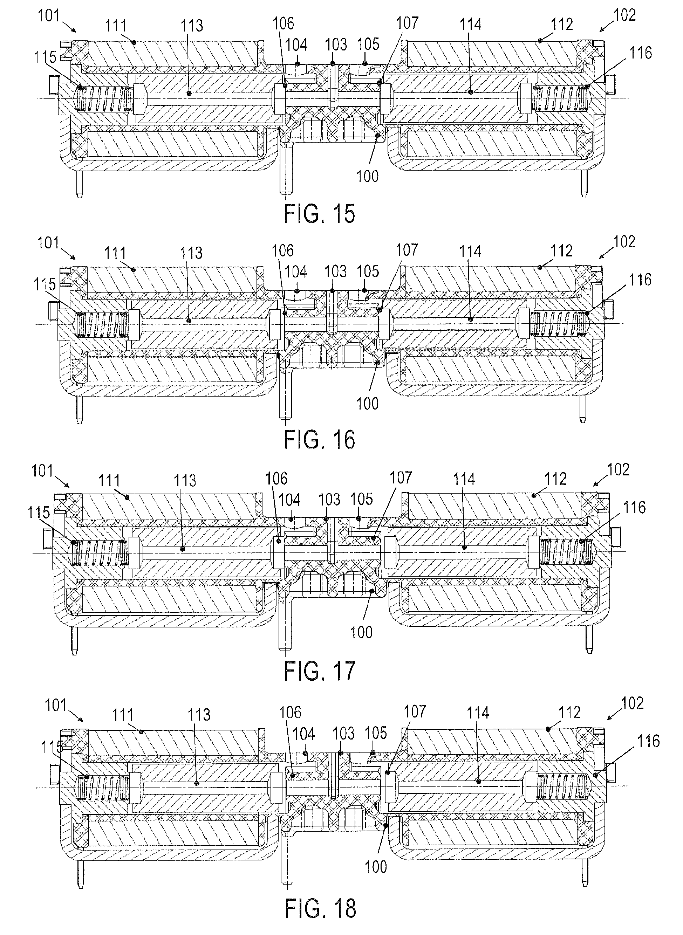

The first fluid supply control valve 101 and the second fluid supply control valve 102 may be combined into one constructional unit. One possible configuration of the first fluid supply control valve 101 and the second fluid supply control valve 102 is illustrated in FIG. 15 to FIG. 18 which show a cross-sectional view through the pair of fluid supply control valves 101, 102. The outer dimensions of the pair of fluid supply control valves 101, 102 may match the outer dimensions of the control valve 140 and with the outer dimensions of the second control valve 160. Further, the relative positions of the inlet port 103 of the fluid supply control valves 101, 102, of the outlet port 104 of the first fluid supply control valve 101 and of the outlet port 105 of the second fluid supply control valve 102 may be the same as the relative positions of the third port 143, fourth port 144 and second port 142 on the control valve 140 and the second control valve 160. Thereby, modular assembly and combination into different valve modules is enhanced.

The first fluid supply control valve 101 and the second fluid supply control valve 102 may be actuated independently from each other. The first fluid supply control valve 101 may include a first solenoid 111. A first bias means 115 may bias a first element 113 against a first sealing area 106. The first element 113 may be a first armature and may be formed from magnetic material, e.g. from paramagnetic or ferromagnetic material. In this deenergized condition of the first solenoid 111, there is no fluid communication between the inlet port 103 and the outlet port 104 of the first fluid supply control valve 101. When the first solenoid 111 is energized, the first element 113 is displaced against the force of the first bias means 115 and disengages from the first sealing area 106. Thereby, communication is established between the inlet port 103 and the outlet port 104.

The second fluid supply control valve 102 may have a corresponding configuration. The second fluid supply control valve 102 may include a second solenoid 112. A second bias means 116 may bias a second element 114 against a second sealing area 107. The second element 114 may be a second armature and may be formed from magnetic material, e.g. from paramagnetic or ferromagnetic material. In this deenergized condition of the second solenoid 112, there is no fluid communication between the inlet port 103 and the outlet port 105 of the second fluid supply control valve 102. When the second solenoid 112 is energized, the second element 114 is displaced against the force of the second bias means 116 and disengages from the second sealing area 107. Thereby, communication is established between the inlet port 103 and the outlet port 105.

The first fluid supply control valve 101 and the second fluid supply control valve 102 can be controlled by energizing or deenergizing the first solenoid 111 and second solenoid 112. The first fluid supply control valve 101 and the second fluid supply control valve 102 may be controlled to selectively pass gas or another working fluid to the control valve 140 and/or to the second control valve 160. In combination with control of the control valve 140 and/or the second control valve 160, it is possible to individually address each one of four inflatable fluid chambers such that each inflatable fluid chamber can be individually inflated or deflated. For illustration, by energizing the first solenoid 111 of the first fluid supply control valve 101, gas or another working fluid can be passed to the control valve 140. By energizing or deenergizing the first solenoid 51 of the control valve 140, either the first inflatable chamber communicating with the first port 141 or the second inflatable chamber communicating with the second port 142 can be inflated. Similarly, by energizing the second solenoid 112 of the second fluid supply control valve 102, gas or another working fluid can be passed to the second control valve 160. By energizing or deenergizing the first solenoid of the second control valve 160, either the inflatable chamber communicating with the first port or the inflatable chamber communicating with the second port of the second control valve 160 can be inflated.

FIG. 15 to FIG. 18 show different states of the pair of the first fluid supply control valve 101 and the second fluid supply control valve 102. FIG. 15 shows a state in which the first fluid supply control valve 101 and the second fluid supply control valve 102 are closed. Such a state can be attained by deenergizing the first solenoid 111 of the first fluid supply control valve 101 and the second solenoid 112 of the second fluid supply control valve 102. Such a state may be used when none of the inflatable chambers of the seat adjusting device is to be inflated. FIG. 16 shows a state in which the first fluid supply control valve 101 is open such that the inlet port 103 communicates with the outlet port 104, and the second fluid supply control valve 102 is closed. Such a state can be attained by energizing the first solenoid 111 of the first fluid supply control valve 101 and deenergizing the second solenoid 112 of the second fluid supply control valve 102. Such a state may be used when one of the inflatable chambers which is in communication with the control valve 140 is to be inflated.

FIG. 17 shows a state in which the first fluid supply control valve 101 is closed and the second fluid supply control valve 102 is open, such that the inlet port 103 communicates with the outlet port 105. Such a state can be attained by deenergizing the first solenoid 111 of the first fluid supply control valve 101 and energizing the second solenoid 112 of the second fluid supply control valve 102. Such a state may be used when one of the inflatable chambers which is in communication with the second control valve 160 is to be inflated. FIG. 18 shows a state in which the first fluid supply control valve 101 and the second fluid supply control valve 102 are open, such that the inlet port 103 communicates with the outlet port 104 and with the outlet port 105. Such a state can be attained by energizing the first solenoid 111 of the first fluid supply control valve 101 and the second solenoid 112 of the second fluid supply control valve 102. Such a state may be used when one of the inflatable chambers which is in communication with the control valve 140 is to be inflated and one of the inflatable chambers which is in communication with the second control valve 160 is to be inflated at the same time.

Seat adjusting devices according to embodiments have been described. Other configurations may be implemented in other embodiments. For illustration, while electromagnetic actuators having a solenoid and a bias spring have been described, other electromagnetic actuators may be used.

The seat adjusting devices of embodiments include a valve module that has a modular configuration which allows different types of valves to be combined in a flexible manner. While a valve module including two 4/4-way control valves has been described, the valve module may combine at least one 4/4-way control valve with other types of valves.

Additional elements or features may be used in seat adjusting devices of embodiments. For illustration, noise damper elements may be integrated into the housing of the valve module. While a valve module having integrated pressure sensors has been described, the pressure sensor(s) may also be omitted from the valve module and/or may be provided separately.

While embodiments have been described in which a 4/4-way control valve includes two different displaceable elements which are independently controlled by two separate solenoids, other configurations for the 4/4-way control valve may be used in other embodiments. For illustration, there may be only one displaceable element which is displaced to four different positions to implement 4/4-way control valve operation. For further illustration, while embodiments have been described in detail in which the 4/4-way valve is formed as an integral unit, a 4/4-way valve functionality can also be realized by appropriately combining other valves such that the resultant control valve has four ports and four working positions.

While exemplary embodiments have been described in the context of lumbar support adjustment and side support adjustment, embodiments may also be configured to only provide lumbar support adjustment or to only provide side support adjustment or to provide still other kinds of seat adjustment. For illustration, in other embodiments, pneumatic massage units may alternatively or additionally also be controlled using a 4/4-way control valve.

Various effects can be attained using seat adjusting devices of embodiments. For illustration, a total of four inflatable fluid chambers can be controlled using two 4/4-way control valves. The states of up to four inflatable chambers may be mapped with memory or without memory. No energy needs to be supplied to the 4/4-way control valves as long as no inflation or deflation operation takes place. Fluid exchange between inflatable chambers may be suppressed when using different 4/4-way control valves to inflate or deflate two different side support chambers or other inflatable chambers.

Embodiments of the invention may be used to supply fluid to various types of support bladders in a wide variety of seats. The embodiments may in particular be used for seat adjustment of vehicle seats, such as automotive vehicle seats, without being limited thereto.

## Claims

1. A seat adjusting device, comprising:
a plurality of inflatable chambers (2-5) which includes a first inflatable chamber (2) and a second inflatable chamber (4); and
a valve module (10) in communication with the plurality of inflatable chambers (2-5), the valve module (10) comprising a control valve (11; 40; 140), **characterised in**, that the control valve (11; 40; 140) is a 4/4-way valve having four ports (41-44; 141-144) and four positions, a first port (41; 141) of the control valve (11; 40; 140) being in communication with the first inflatable chamber (2) and a second port (42; 142) of the control valve (11; 40; 140) being in communication with the second inflatable chamber (4).

2. The seat adjusting device of claim 1,
the control valve (11; 40; 140) comprising an internal channel (59) and a first solenoid (51), the control valve (11; 40; 140) being configured such that
the internal channel (59) is in communication with the first port (41; 141) when the first solenoid (51) is deenergized and
the internal channel (59) is in communication with the second port (42; 142) when the first solenoid (51) is energized.

3. The seat adjusting device of claim 2,
the control valve (11; 40; 140) comprising a second solenoid (52), the control valve (11; 40; 140) being configured such that
the internal channel (59) is in communication with a third port (43; 143) of the control valve (11; 40; 140) when the second solenoid (52) is deenergized and
the internal channel (59) is in communication with a fourth port (44; 144) of the control valve (11; 40; 140) when the second solenoid (52) is energized.

4. The seat adjusting device of claim 3,
the third port (43; 143) being in communication with a fluid supply channel (96) and
the fourth port (44; 144) being in communication with a fluid discharge channel (98).

5. The seat adjusting device of claim 4,
the fluid supply channel (96) and the fluid discharge channel (98) being delimited by walls of a housing of the valve module (10).

6. The seat adjusting device of claim 4 or claim 5, further comprising
a pressure fluid source (7) coupled to the fluid supply channel (96).

7. The seat adjusting device of claim 6,
the valve module (10) comprising a fluid supply control valve (101; 102) coupled to the fluid supply channel (96).

8. The seat adjusting device of any one of claims 3 to 7,
the control valve (11; 40; 140) comprising a metal core (50) around which both the first solenoid (51) and the second solenoid (52) are wound.

9. The seat adjusting device of any one of claims 2 to 8,
the valve module (10) having a housing (21-23), the housing having plural walls,
the first port (41; 141) of the control valve (11; 40; 140) being in communication with a first connector (31) and the second port (42; 142) of the control valve (11; 40; 140) being in communication with a second connector (32), the first connector (31) and the second connector (32) being provided on the same wall (24) of the housing (21-23).

10. The seat adjusting device of any one of the preceding claims,
one of the first inflatable chamber (2) and the second inflatable chamber (4) being a chamber of a lumbar support device, and
the other one of the first inflatable chamber (2) and the second inflatable chamber (4) being a chamber of a side support device.

11. The seat adjusting device of any one of the preceding claims,
wherein the valve module (10) comprises at least one further 4/4-way control valve (60; 160).

12. The seat adjusting device of claim 11,
wherein the at least one further 4/4-way control valve (60; 160) has a first port (61) in communication with another chamber of a lumbar support device and a second port (62) in communication with another chamber of a side support device.

13. A seat, comprising:
the seat adjusting device (19) of any one of the preceding claims.

14. A method of providing seat adjustment by controlling a control valve (11; 40; 140) to selectively supply fluid to a plurality of inflatable chambers (2-5) or to selectively discharge fluid from the plurality of inflatable chambers (2-5),
**characterised in**, that the method comprises:
controlling the control valve (11; 40; 140) which is a 4/4-way valve having four ports (41-44; 141-144) and four positions, a first port (41; 141) of the control valve (11; 40; 140) being in communication with the first inflatable chamber (2) and a second port (42; 142) of the control valve (11; 40; 140) being in communication with the second inflatable chamber (4).

15. The method of claim 14, wherein the control valve (11; 40; 140) has a first solenoid (51) and a second solenoid (52), and the controlling comprises:
selectively energizing and deenergizing the first solenoid (51) and/or the second solenoid (52) to set the control valve (11; 40; 140) to a desired one of the four positions.

## Patentansprüche

1. Sitzeinstellungsvorrichtung, umfassend:
eine Vielzahl von aufblasbaren Kammern (2-5), die eine erste aufblasbare Kammer (2) und eine zweite aufblasbare Kammer (4) enthalten; und
ein Ventilmodul (10), das mit der Vielzahl der aufblasbaren Kammern (2-5) in Verbindung steht, wobei das Ventilmodul (10) ein Steuerventil (11; 40; 140) umfasst, **dadurch gekennzeichnet, dass**
das Steuerventil (11; 40; 140) ein 4/4-Wegeventil mit vier Öffnungen (41-44; 141-144) und vier Positionen ist, wobei eine erste Öffnung (41; 141) des Steuerventils (11; 40; 140) mit der ersten aufblasbaren Kammer (2) in Verbindung steht und die zweite Öffnung (42; 142) des Steuerventils (11; 40; 140) mit der zweiten aufblasbaren Kammer (4) in Verbindung steht.

2. Sitzeinstellvorrichtung nach Anspruch 1,
wobei das Steuerventil (11; 40; 140) einen ersten internen Kanal (59) und eine erste Magnetspule (51) umfasst, wobei das Steuerventil (11; 40; 140) so eingerichtet ist, dass
der interne Kanal (59) mit der ersten Öffnung (41; 141) in Verbindung steht, wenn aus der ersten Magnetspule (51) Energie entfernt wird, und
der interne Kanal (59) mit der zweiten Öffnung (42; 142) in Verbindung steht, wenn der ersten Magnetspule (51) Energie zugeführt wird.

3. Sitzeinstellvorrichtung nach Anspruch 2,
wobei das Steuerventil (11; 40; 140) eine zweite Magnetspule (52) umfasst, wobei das Steuerventil (11; 40; 140) so eingerichtet ist, dass
der interne Kanal (59) mit einer dritten Öffnung (43; 143) des Steuerventils (11; 40; 140) in Verbindung steht, wenn aus der zweiten Magnetspule (52) Energie entfernt wird, und
der interne Kanal (59) mit einer vierten Öffnung (44; 144) des Steuerventils (11; 40; 140) in Verbindung steht, wenn der zweiten Magnetspule (52) Energie zugeführt wird.

4. Sitzeinstellvorrichtung nach Anspruch 3,
wobei die dritte Öffnung (43; 143) mit einem Fluidversorgungskanal (96) in Verbindung steht, und
die vierte Öffnung (44; 144) mit einem Fluidaustrittskanal (98) in Verbindung steht.

5. Sitzeinstellvorrichtung nach Anspruch 4,
wobei der Fluidversorgungskanal (96) und der Fluidaustrittskanal (98) durch Wände eines Gehäuses des Ventilmoduls (10) voneinander abgegrenzt sind.

6. Sitzeinstellvorrichtung nach Anspruch 4 oder 5, weiterhin umfassend
eine Druckfluidquelle (7), die mit dem Fluidversorgungskanal (96) verbunden ist.

7. Sitzeinstellvorrichtung nach Anspruch 6,
wobei das Ventilmodul (10) ein Fluidversorgungssteuerventil (101; 102) umfasst, das mit dem Fluidversorgungskanal (96) verbunden ist.

8. Sitzeinsteillvorrichtung nach einem der Ansprüche 3 bis 7,
wobei das Steuerventil (11; 40; 140) einen Metallkern (50) umfasst, um den sowohl die erste Magnetspule (51) als auch die zweite Magnetspule (52) gewickelt sind.

9. Sitzeinstellvorrichtung nach einem der Ansprüche 2 bis 8,
wobei das Ventilmodul (10) ein Gehäuse (21-23) aufweist, wobei das Gehäuse eine Mehrzahl von Wänden aufweist,
wobei die erste Öffnung (41; 141) des Steuerventils (11; 40; 140) mit einem ersten Verbinder (31) in Verbindung steht und die zweite Öffnung (42; 142) des Steuerventils (11; 40; 140) mit einem zweiten Verbinder (32) in Verbindung steht, wobei der erste Verbinder (31) und der zweite Verbinder (32) auf der selben Wand (24) des Gehäuses (21-23) angebracht sind.

10. Sitzeinstellvorrichtung nach einem der vorhergehenden Ansprüche,
wobei entweder die erste aufblasbare Kammer (2) oder die zweite aufblasbare Kammer (4) eine Kammer einer Lendenunterstützungsvorrichtung ist, und
die andere der ersten aufblasbaren Kammer (2) oder der zweiten aufblasbaren Kammer (4) eine Kammer einer seitlichen Haltevorrichtung ist.

11. Sitzeinstellvorrichtung nach einem der vorhergehenden Ansprüche,
wobei das Ventilmodul (10) mindestens ein weiteres 4/4-Wegesteuerventil (60; 160) umfasst.

12. Sitzeinstellvorrichtung nach Anspruch 11,
wobei das mindestens ein weiteres 4/4-Wegesteuerventil (60; 160) eine erste Öffnung (61) aufweist, die mit einer anderen Kammer einer Lendenunterstützungsvorrichtung in Verbindung steht und eine zweite Öffnung (62) aufweist, die mit einer anderen Kammer der seitlichen Haltevorrichtung in Verbindung steht.

13. Sitz, umfassend:
die Sitzeinstellvorrichtung (19) nach einem der vorhergehenden Ansprüche.

14. Verfahren zur Bereitstellung einer Sitzeinstellung durch Steuern eines Steuerventils (11; 40; 140), um eine Vielzahl von aufblasbaren Kammern (2-5) selektiv mit Fluid zu versorgen, oder Fluid aus der Vielzahl der aufblasbaren Kammern (2-5) selektiv abzuführen,
**dadurch gekennzeichnet, dass** das Verfahren umfasst:
Steuern des Steuerventils (11; 40; 140), das ein 4/4-Wegeventil mit vier Öffnungen (41-44; 141-144) und vier Positionen ist, wobei eine erste Öffnung (41; 144) des Steuerventils (11; 40; 140) mit der ersten aufblasbaren Kammer (2) in Verbindung steht und eine zweite Öffnung (42; 142) des Steuerventils (11; 40; 140) mit der zweiten aufblasbaren Kammer (4) in Verbindung steht.

15. Verfahren nach Anspruch 14, wobei das Steuerventil (11; 40; 140) eine erste Magnetspule (51) und eine zweite Magnetspule (52) aufweist, und das Steuern umfasst:
Selektives Zuführen von Energie und Entfernen von Energie der ersten Magnetspule (51) und/oder der zweiten Magnetspule, um das Steuerventil (11; 40; 140) auf eine erwünschte Position der vier Positionen zu setzen.

## Revendications

1. Dispositif de réglage de siège comprenant :
une pluralité de chambres gonflables (2-5) qui comprend une première chambre gonflable (2) et une seconde chambre gonflable (4) ; et
un module de valve (10) en communication avec la pluralité de chambres gonflables (2-5), le module de valve (10) comprenant une valve de réglage (11 ; 40 ; 140), **caractérisé en ce que** :
la valve de réglage (11 ; 40 ; 140) est une valve à 4/4 voies ayant quatre orifices (41-44 ; 141-144) et quatre positions, un premier orifice (41 ; 141) de la valve de réglage (11 ; 40 ; 140) étant en communication avec la première chambre gonflable (2) et un deuxième orifice (42 ; 142) de la valve de réglage (11 ; 40 ; 140) étant en communication avec la seconde chambre gonflable (4).

2. Dispositif de réglage de siège selon la revendication 1,
la valve de réglage (11 ; 40 ; 140) comprenant un canal interne (59) et un premier solénoïde (51), la valve de réglage (11 ; 40 ; 140) étant configurée de sorte que :
le canal interne (59) est en communication avec le premier orifice (41 ; 141) lorsque le premier solénoïde (51) n'est plus alimenté, et
le canal interne (59) est en communication avec le deuxième orifice (42 ; 142) lorsque le premier solénoïde (51) est alimenté.

3. Dispositif de réglage de siège selon la revendication 2,
la valve de réglage (11 ; 40 ; 140) comprend un second solénoïde (52), la valve de réglage (11 ; 40 ; 140) étant configurée de sorte que :
le canal interne (59) est en communication avec un troisième orifice (43 ; 143) de la valve de réglage (11 ; 40 ; 140) lorsque le second solénoïde (52) n'est plus alimenté, et
le canal interne (59) est en communication avec un quatrième orifice (44 ; 144) de la valve de réglage (11 ; 40 ; 140) lorsque le second solénoïde (52) est alimenté.

4. Dispositif de réglage de siège selon la revendication 3,
le troisième orifice (43 ; 143) étant en communication avec un canal d'alimentation en fluide (96), et
le quatrième orifice (44 ; 144) étant en communication avec un canal de décharge de fluide (98).

5. Dispositif de réglage de siège selon la revendication 4,
le canal d'alimentation en fluide (96) et le canal de décharge de fluide (98) étant délimités par des parois d'un boîtier du module de valve (10).

6. Dispositif de réglage de siège selon la revendication 4 ou la revendication 5, comprenant en outre :
une source de fluide sous pression (7) couplée au canal d'alimentation en fluide (96).

7. Dispositif de réglage de siège selon la revendication 6,
le module de valve (10) comprenant une valve de réglage d'alimentation en fluide (101 ; 102) couplée au canal d'alimentation en fluide (96).

8. Dispositif de réglage de siège selon l'une quelconque des revendications 3 à 7,
la valve de réglage (11 ; 40 ; 140) comprenant un noyau métallique (50) autour duquel à la fois le premier solénoïde (51) et le second solénoïde (52) sont enroulés.

9. Dispositif de réglage de siège selon l'une quelconque des revendications 2 à 8,
le module de valve (10) ayant un boîtier (21-23), le boîtier ayant plusieurs parois,
le premier orifice (41 ; 141) de la valve de réglage (11; 40 ; 140) étant en communication avec le premier connecteur (31) et le deuxième orifice (42 ; 142) de la valve de réglage (11 ; 40 ; 140) étant en communication avec un second connecteur (32), le premier connecteur (31) et le second connecteur (32) étant prévus sur la même paroi (24) du boîtier (21-23).

10. Dispositif de réglage de siège selon l'une quelconque des revendications précédentes,
l'une parmi la première chambre gonflable (2) et la seconde chambre gonflable (4) étant une chambre d'un dispositif de support lombaire, et
l'autre parmi la première chambre gonflable (2) et la seconde chambre gonflable (4) étant une chambre d'un dispositif de support latéral.

11. Dispositif de réglage de siège selon l'une quelconque des revendications précédentes,
dans lequel le module de valve (10) comprend au moins une autre valve de réglage à 4/4 voies (60 ; 160).

12. Dispositif de réglage de siège selon la revendication 11,
dans lequel la au moins une autre valve de réglage à 4/4 voies (60 ; 160) a un premier orifice (61) en communication avec une autre chambre d'un dispositif de support lombaire et un second orifice (62) en communication avec une autre chambre d'un dispositif de support latéral.

13. Siège comprenant :
le dispositif de réglage de siège (19) selon l'une quelconque des revendications précédentes.

14. Procédé pour fournir le réglage du siège en réglant une valve de réglage (11 ; 40 ; 140) afin de fournir sélectivement du fluide à une pluralité de chambres gonflables (2-5) ou afin de décharger sélectivement du fluide de la pluralité de chambres gonflables (2-5),
**caractérisé en ce que** le procédé comprend l'étape consistant à :
régler la valve de réglage (11 ; 40 ; 140) qui est une valve à 4/4 voies ayant quatre orifices (41-44 ; 141-144) et quatre positions, un premier orifice (41 ; 141) de la valve de réglage (11 ; 40 ; 140) étant en communication avec la première chambre gonflable (2) et un deuxième orifice (42 ; 142) de la valve de réglage (11 ; 40 ; 140) étant en communication avec la seconde chambre gonflable (4).

15. Procédé selon la revendication 14, dans lequel la valve de réglage (11 ; 40 ; 140) a un premier solénoïde (51) et un second solénoïde (52) et le réglage comprend les étapes consistant à :
sélectivement alimenter et arrêter d'alimenter le premier solénoïde (51) et/ou le second solénoïde (52) afin de placer la valve de réglage (11 ; 40 ; 140) dans une position souhaitée des quatre positions.
